Europäisches Patentamt

European Patent Office

Office européen des brevets

(11) Numéro de publication: **0 323 311 B1**

# FASCICULE DE BREVET EUROPEEN

(45) Date de publication de fascicule du brevet: **08.02.95**

(51) Int. Cl.⁶: **C08G 12/12**

(21) Numéro de dépôt: **88403234.3**

(22) Date de dépôt: **19.12.88**

Le dossier contient des informations techniques présentées postérieurement au dépôt de la demande et ne figurant pas dans le présent fascicule.

(54) **Procédé de fabrication des colles de résines aqueuses urée-formol.**

(30) Priorité: **23.12.87 FR 8717996**

(43) Date de publication de la demande:
**05.07.89 Bulletin 89/27**

(45) Mention de la délivrance du brevet:
**08.02.95 Bulletin 95/06**

(84) Etats contractants désignés:
**AT BE CH DE ES FR GB GR IT LI LU NL SE**

(56) Documents cités:
**EP-A- 0 013 447
DD-A- 144 170
FR-A- 2 504 542
US-A- 2 428 752
US-A- 3 896 087**

**PATENT ABSTRACTS OF JAPAN, vol 7, no. 263 (C-196)(1408) 24 novembre 1983; & JP-A-58 147 478**

(73) Titulaire: **ELF ATOCHEM S.A.
4 & 8, Cours Michelet
La Défense 10
F-92800 Puteaux (FR)**

(72) Inventeur: **Garrigue, Roger
23, rue du Capitaine Escudié
F-31000 Toulouse (FR)**
Inventeur: **Lalo, Jack
116, avenue Saint Exupéry
F-31400 Toulouse (FR)**
Inventeur: **Leclere, Jean-Luc
Chemin du Gastou
F-31190 Miremont (FR)**

(74) Mandataire: **Rochet, Michel et al
ELF ATOCHEM S.A.
Département Propriété Industrielle
4-8, Cours Michelet
La Défense 10 - Cedex 42
F-92091 Paris-La-Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un nouveau procédé de fabrication de résines urée-formol. Elle a plus particulièrement pour objet un nouveau procédé de fabrication de résines urée-formol à faible dégagement de formol, stables au stockage et réactives.

Les résines urée-formol sont des produits connus qui sont utilisées largement dans l'industrie du bois pour la fabrication en particulier de panneaux particules. Elles sont fabriquées de façon connue par condensation d'urée et de formol à pH compris entre 4 et 7 et à une température voisine de l'ébullition : de préférence cette réaction de condensation est réalisée en plusieurs étapes.

Le brevet français n° 2 504 542 décrit, dans la préparation de colles de résines aqueuses à base d'aminoplastes, les opérations consistant à condenser du formaldéhyde et de l'urée dans un rapport molaire d'au moins 1,8 jusqu'à ce que le produit résultant soit diluable dans l'eau entre certaines limites, à ajouter, à un pH d'au moins 6, une quantité d'urée telle qu'il en résulte un rapport molaire de 0,8 à 1,2.

Le brevet japonais n° 58-147 478 décrit la préparation d'une résine d'urée comprenant les étapes consistant à faire réagir du formol avec de l'urée dans un rapport molaire de l'urée au formol de 1:1,7 à 2,4 à pH 8,6-7,6, à ajuster le pH à 4,4 à 5,0 par un acide, à poursuivre la réaction sous chauffage, à neutraliser le mélange réactionnel par un alcali au moment où il donne un trouble blanc lorsqu'on le fait tomber goutte à goutte dans de l'eau, à plus de 40°C, l'addition de formol puis d'urée pour un rapport final urée à formol de 1:1,15 à 1,6 pour poursuivre la réaction, puis à déshydrater le mélange réactionnel.

Le principal inconvénient des résines urée-formol est de provoquer des émanations élevées de formol libre. On a essayé de réduire le taux de formol libre en mettant en oeuvre divers procédés de fabrication : malheureusement lorsque l'on veut atteindre des taux de formol particulièrement bas, l'expérience montre que cet objectif s'accompagne a la fois d'une diminution de la réactivité et de la stabilité des résines ainsi que d'une dégradation des propriétés mécaniques des panneaux finis. On a aussi proposé pour supprimer le formol libre, l'utilisation de résines dépourvues de formol en particulier des résines à base de solutions d'isocyanates. Malheureusement, le problème du formol est remplacé par celui des isocyanates dont l'action sur l'homme est plus néfaste et plus durable que ne l'est le formol, puisqu'on a mis en évidence la présence de groupes isocyanates libres dans les panneaux particules même après plusieurs années de fabrication.

Le besoin se fait donc sentir de mettre au point des résines urée-formol présentant des taux de formol réduits, une bonne stabilité doublée d'une bonne réactivité et dont l'utilisation conduit a des panneaux finis dégageant peu de formol et présentant de bonnes caractéristiques mécaniques.

La présente invention concerne un procédé de fabrication des colles de résines aqueuses urée-formol, présentant un rapport molaire final $\frac{F}{U}$ compris entre 0,85 et 1,35, caractérisé en ce qu'on condense, dans une première étape, un précondensat d'urée et de formol avec de l'urée en quantités telles que le rapport molaire $\frac{F}{U}$ à cette étape soit compris entre 1,8 et 2,3, la condensation étant réalisée à pH compris entre 6 et 8, à une température comprise entre 40 et 80°C ; on poursuit ensuite dans une seconde étape la condensation à pH acide compris entre 4 et 6 jusqu'à ce que la solution présente un point trouble avec de l'eau à une température comprise entre 10 et 40°C, le point trouble étant déterminé en mettant en solution un volume de résine pour trois volumes d'eau ; on ajoute du formol dans une troisième étape en quantité telle que le rapport molaire $\frac{F}{U}$ à cette étape soit compris entre plus de 1,8 a 3, à pH compris entre 6 et 8, et en poursuivant la condensation dans la même plage de température, le produit obtenu étant ensuite éventuellement concentré sous vide de façon à obtenir un extrait sec de la résine finale entre 60 et 70% en poids ; on ajoute ensuite dans une quatrième étape de l'urée de façon que le rapport molaire $\frac{F}{U}$ soit compris entre 0,85 et 1,35, l'addition d'urée étant réalisée à une température au plus égale à 60°C ; la résine obtenue à la fin de la dernière étape étant ensuite éventuellement concentrée sous vide dans le cas où cette phase a été omise à la fin de la troisième étape, de façon à obtenir une résine présentant un extrait sec final de 60 à 70% en poids.

Le procédé de la présente invention consiste à réaliser dans une première étape la condensation d'un précondensat urée-formol avec de l'urée en quantités telles que le rapport molaire $\frac{F}{U}$ à cette étape soit compris entre 1,8 et 2,3, la condensation étant réalisée à reflux à pH compris entre 6 et 8 : de façon connue, la température de condensation est comprise entre 40 et 80°C. Le précondensat urée-formol mis en oeuvre dans cette étape est de façon connue un précondensat qui présente un rapport molaire $\frac{F}{U}$ compris entre 4 et 10.

La seconde étape du procédé objet de l'invention, consiste à poursuivre la condensation à pH acide compris entre 4 et 6 jusqu'à ce que la solution présente un point trouble avec de l'eau à une température comprise entre 10 et 40°C : selon l'invention, le point trouble de la résine est déterminé comme indiqué ci-dessus.

Selon le procédé de l'invention, une troisième étape est mise en oeuvre ; lors de cette étape, on ajoute du formol, le cas échéant sous la forme d'un précondensat uréeformol, en quantité telle que le rapport molaire $\frac{F}{U}$ de la résine à cette étape soit compris entre plus de 1,8 et 3 : cette étape est conduite à pH compris entre 6 et 8 et à une température de 40 à 80°C. La mise en oeuvre de cette troisième étape permet de disposer des résines urée-formol encore plus réactives tout en conservant une bonne stabilité. A la fin de la troisième étape, la résine peut être ensuite concentrée sous vide à une température au plus égale à 70°C de façon à obtenir une résine présentant un extrait sec compris entre 60 et 70% en poids.

Le procédé de l'invention comporte une quatrième étape qui consiste à ajouter de l'urée. Cette addition d'urée, réalisée à une température au plus égale à 60°C, permet d'ajuster le rapport final $\frac{F}{U}$ des résines obtenues selon le procédé de l'invention : ce rapport selon l'invention est compris entre 0,85 et 1,35. La concentration de la résine est ensuite réalisée à la fin de la dernière étape si cette phase a été omise à la fin de la troisième étape.

Selon une dernière caractéristique du procédé de l'invention, il est possible d'ajouter à la résine, en fin de synthèse un agent "tampon" constitué en particulier de borax : la mise en oeuvre d'un tel agent permet d'obtenir des résines qui gardent leur réactivité au stockage.

On a trouvé qu'en opérant dans ces conditions, on obtenait des résines urée-formol stables au stockage, réactives et qui permettent de fabriquer des panneaux particules qui présentent des taux d'émanation en formol réduits alliés à de bonnes propriétés mécaniques.

Les exemples suivants illustrent la présente invention. Toutes les quantités sont exprimées en parties en poids.

Exemple 1

Dans un réacteur muni d'un agitateur, d'un refrigérant et d'un dispositif d'agitation, on charge 1341 parties d'un précondensat urée-formol (Formol = 48,6 %, urée = 18,5 %) puis 654 parties d'urée perles et 369 parties d'eau. Après neutralisation à pH = 7,2 le mélange est amené au reflux par chauffage modéré. Le mélange est maintenu au reflux 20 mn à pH 7,2 avant acidification à pH = 5,4. L'évolution de la condensation est suivie par l'évolution de la viscosité mesurée à 20°C. La condensation est arrêtée en remontant le pH du milieu à 7, lorsque l'on atteint une viscosité de 700 mPa.s. Le mélange est refroidi à 60°C et l'on introduit 349 g de précondensat urée-formol (Formol = 48,6 % - urée = 18, 5%). Le mélange est maintenu 10 mn à 60°C et pH = 7, puis concentré sous vide à 40°C par distillation de 170 parties d'eau. On ajoute ensuite 913 parties d'urée solide et 3g de borax. Le pH est ajusté à 9,2 et le mélange agité jusqu'à dissolution complète de l'urée. Les caractéristiques de la résine sont résumées dans le tableau 1.

Exemple 2

On répète l'exemple 1 mais la condensation est arrêtée à une viscosité de 950 mPa.s. Après refroidissement à 60°C, on ajoute 208 parties de formol à 49,5 % de concentration, on maintient le mélange à 60°C et à pH = 6,9 pendant 8mn. Après refroidissement à 40°C on concentre sous vide à cette température par distillation de 326 parties d'eau, on ajoute ensuite 985 parties d'urée perle et 3,9 parties de borax. Le pH est ajusté à 9,0 et le mélange agité jusqu'à dissolution complète. Les propriétés sont résumées dans le tableau 1.

Exemple 3

On répète l'exemple 2 mais après refroidissement à 60°C, on ajoute 416 parties de formol à 49,5 % de concentration et on maintient le mélange à 62°C et pH = 7,0 pendant 5mn. La synthèse de la résine est ensuite poursuivie comme dans l'exemple 2 en receuillant une quantité d'eau distillée lors de la concentration de 350 parties en ajoutant 1176g d'urée perlee et de 4,3 parties de borax. Les propriétés sont résumées dans le tableau 1.

Exemple 4

On charge 2430 parties de précondensat urée-formol (contenant 48,5 % de formol et 20,1 % d'urée) puis 416 parties d'eau et 694 parties d'urée en perles. Le mélange est neutralisé à pH = 7,2 et par chauffage modéré porté au reflux. Après 25 mn de reflux à pH = 7,2 le mélange est acidifié à pH = 5,2. La réaction de condensation est suivie par l'évolution de la température de trouble d'un mélange de 3 volumes d'eau et d'un volume de condensat. La température du milieu est abaissée progressivement jusqu'à 85°C par refroidissement, à mesure que l'on se rapproche du test d'arrêt. La condensation est arrêté en remontant le pH du milieu à 7,0 et par refroidissement énergique lorsqu'on a atteint une temperature de trouble de 29°C.

Après arrêt de la condensation, le mélange est refroidi à 60°C et l'on introduit 1487 parties · de précondensat urée-formol (formol = 48,5% - urée = 20,1%). Le mélange est maintenu 10 mn à pH = 7,0 puis refroidi jusqu'à 40°C et on concentre ensuite par évaporation sous vide de 142 parties d'eau. On ajoute à température ambiante 2268 parties d'urée et 7,4 g de borax, après dissolution de ces réactifs, le pH est ajusté à 9,0. Les propriétés de la résine sont résumées dans le tableau 1.

Exemple 5

Cet exemple est identique à l'exemple 4 sauf qu'après arrêt de la condensation la quantité de précondensat urée-formol introduite est de 561 parties. L'eau évaporée lors de la concentration est de 226 parties et l'urée solide introduite après concentration de 1440 parties. Les propriétés de la résine sont résumées dans le tableau 1.

Exemple 6

L'exemple 4 est répété en utilisant les quantités suivantes :
- précondensat après condensation : 1098 parties
- eau évaporée sous vide : 188 parties
- urée solide ajoutée après concentration : 1820 parties
Les propriétés de la résine sont résumées dans le tableau 1.

Exemple 7

L'exemple 4 est répeté mais après arrêt de la condensation le mélange est refroidi à 60°C, puis on introduit 1098 parties de précondensat urée-formol (F = 48,5 % et U = 20.1 %), 7,4 parties de borax et 1213 parties d'urée perles. Le mélange est maintenu 15 minutes à 60°C puis refroidi à 188 g d'eau. Après refroidissement à 20°C le pH de la résine est ajusté à 9,0. Les propriétés de la résine sont résumées dans le tableau 1.

Exemple 8

On charge 1300 parties de précondensat urée-formol (F = 47 5 % - U = 19,9 %) 197 parties d'eau et 329 parties d'urée perles. Le mélange est neutralisé à pH = 7,0. A l'aide d'un chauffage modéré, on porte le mélange au reflux. Après 20 mn de reflux à pH = 6,8 , le mélange est acidifié à pH = 5,0 et la condensation est poursuivie jusqu'à l'obtention d'un point de trouble (3 volumes d'eau / 1 vol. de résine) à 28°C. On introduit alors 518 parties de précondensat urée-formol (F = 47,5 % - U = 19,9 %) et la condensation est poursuivie à 95°C et à pH = 5,1 jusqu'à ce que l'on obtienne une viscosité de 860 mPa.s. Le pH est ensuite remonté à 7,0 et le mélange refroidi à 60°C. On introduit alors 3,2 g de borax et 615 parties durée perles. Le mélange est maintenu 10 mn à 64°C et pH = 8,0 , on le refroidit ensuite par mise sous vide et on concentre la résine par distillation sous vide à 35°C : on recueille 148 parties d'eau, On introduit alors 308 parties durée perles. Après refroidissement à 20°C et dissolution complète de l'urée on ajuste le pH à 9,0. Les propriétés de la résine sont résumées dans le tableau 1.

Exemple 9

On charge 2492 parties de précondensat urée-formol (F = 47,4 % - U = 19,7 %), 366 parties d'eau et 633 parties durée perles. Le mélange est neutralisé à pH = 7,2 et porté à 100°C par un chauffage modéré. Après 10 mn à 100°C et pH = 6,9 , on acidifie à pH = 5,1 et la condensation est menée jusqu'à l'obtention d'un point de trouble (1 volume de résine et 3 volumes d'eau) à 27°C. Le pH du milieu est alors remonté à 6, 90 et l'on refroidit à 60°C. Après introduction de 990 parties de précondensat urée-formol (F = 47,35 % - U = 19,7 %) on maintient le mélange à 60°C et pH = 6,5 pendant 10 mn puis l'on introduit 1175 parties d'urée perles, tout en maintenant le mélange 10 mn à 60°C et pH = 7,0 puis l'on concentre sous vide à 32°C en distillant 251 g d'eau. On ajoute ensuite 587 parties d'urée perles et 6 parties de borax. Le pH est ajusté à 9,1 et la résine est refroidie à 25°C. L'agitation est maintenue jusqu'à dissolution complète de l'urée et du borax. Les propriétés de la résine sont résumées dans le tableau 1.

Exemple 10

L'exemple 9 est répété sauf qu'on extrait une quantité d'eau lors de la concentration de 831 parties. Les propriétés de la résine sont rémusées dans le tableau 1.

Exemple 11

On charge 910 parties de précondensat urée-formol (F = 47,35 % - U = 19,7 %), 162 parties d'eau et 330 parties d'une solution d'urée à 70 %. Après neutralisation à pH = 7,2 , le milieu est chauffé à reflux. On maintient le mélange à pH = 6,9 et on chauffe à reflux pendant 10 mn. On acidifie ensuite le mélange à pH = 4,6 et l'on suit l'évolution de la condensation par mesure de la viscosité. La condensation est arrêtée lorsque l'on obtient une valeur de 2000 mPa.s après avoir remonté le pH à 7,0. Après refroidissement à 65°C, on introduit 361 parties de précondensat urée-formol (F = 47,35 % - U = 19,7 %) et 429 g d'urée perles. On maintient le mélange 30 mn à 60°C et pH = 7,0. La résine est ensuite concentrée sous vide à 40°C en distillant 207 parties d'eau. On introduit alors 2,2 parties de borax et 215 parties durée. Après dissolution complète de ces réactifs le mélange est refroidi à 20°C et le pH ajusté à 9,1.
Les propriétés de la résine sont résumées dans le tableau 1.

TABLEAU 1

| Exemple N° | Extrait sec ( % ) | Viscosité (mPa.s) | pH | Gel à 80° C (secondes) | Stabilité à 20° C (jours) |
|---|---|---|---|---|---|
| 1 | 64,7 | 450 | 9,0 | 143 | > 53 |
| 2 | 65,7 | 830 | 9,0 | 142 | 48 |
| 3 | 65,3 | 420 | 8,9 | 138 | 77 |
| 4 | 64,7 | 110 | 8,9 | 110 | 33 |
| 5 | 64,1 | 180 | 9,0 | 126 | 77 |
| 6 | 64.0 | 120 | 8,9 | 119 | 85 |
| 7 | 64,1 | 118 | 8,9 | 120 | 90 |
| 8 | 65,9 | 230 | 8,9 | 139 | 97 |
| 9 | 65,5 | 200 | 9,1 | 125 | 100 |
| 10 | 72,6 | 790 | 9,1 | 121 | 45 |
| 11 | 65,5 | 260 | 9,1 | 130 | 101 |

Exemple 12

La résine fabriquée dans l'exemple 9 est utilisée pour la fabrication de panneaux particules. On fabrique des panneaux dans les conditions suivantes :
- Epaisseur brute : 20 mm
- Encollage : 7 % de résine sèche
- Catalyse : 1,2 % de chlorure d'ammonium par rapport au poids de la résine sèche
- Prépressage : 1 minute à une pression de 5 da N/cm2
- Cuisson :

| Température | 180°C |
|---|---|
| Durée | 4 minutes |
| Pression | 30 da N/cm2 |

Les propriétés des panneaux sont résumées dans le tableau 2.

TABLEAU 2

| Résines | Exemple 9 |
|---|---|
| Mélange collant | |
| Viscosité (mPa.s) | 96 |
| Gel 100°C (secondes) | 85 |
| PANNEAUX | |
| Masse volumique (kg/m3) | 611 |
| Traction (da N/cm2) | 6,6 |
| Gonflement % | 12,5 |
| Formol perforateur (my/100g) | 8,6 |

Les caractéristiques ont été déterminées selon les normes suivantes :

| | |
|---|---|
| - Epaisseur, masse volumique | Norme NFB 51222 |
| - Traction V 20 | Norme NFB 51250 |
| - Gonflement % | Norme NFB 51252 |
| - Teneur en formol (perforateur) | Norme EN 120 |

**Revendications**

1. Procédé de fabrication des colles de résines aqueuses urée-formol, caractérisées par le fait qu'elles présentent un rapport final F/U compris entre 0,85 et 1,35, caractérisé en ce qu'

. on condense, dans une première étape, un précondensat d'urée et de formol avec de l'urée en quantités telles que le rapport molaire F/U à cette étape soit compris entre 1,8 et 2,3, la condensation étant réalisée à pH compris entre 6 et 8, à une température comprise entre 40 et 80°C,

. on poursuit ensuite dans une seconde étape la condensation à pH acide compris entre 4 et 6, jusqu'à ce que la solution présente un point trouble avec de l'eau à une température comprise entre 10 et 40°C, le point trouble étant déterminé en mettant en solution un volume de résine pour trois volumes d'eau,

. on ajoute du formol dans une troisième étape en quantité telle que le rapport molaire F/U à cette étape soit compris entre plus de 1,8 et 3, à pH compris entre 6 et 8, et en poursuivant la condensation dans la même plage de température, le produit obtenu étant ensuite éventuellement concentré sous vide, de façon à obtenir un extrait sec de la résine finale entre 60 et 70% en poids,

. on ajoute ensuite dans une quatrième étape de l'urée de façon que le rapport molaire F/U soit compris entre 0,85 et 1,35, l'addition d'urée étant réalisée à une température au plus égale à 60°C,

. la résine obtenue à la fin de la dernière étape étant ensuite éventuellement concentrée sous vide dans le cas où cette phase a été omise à la fin de la troisième étape, de façon à obtenir une résine présentant un extrait sec final de 60 à 70%.

2. Procédé selon la revendication 1, caractérisé par le fait qu'on ajoute, en fin de synthèse, un agent "tampon" constitué de borax.

3. Procédé selon l'une des revendications 1 et 2, caractérisé par le fait qu'à la première étape, on met en oeuvre un précondensat d'urée et de formol présentant un rapport molaire F/U de 4 à 10.

4. Procédé selon l'une des revendications 1 à 3, caractérisé par le fait qu'à la troisième étape, le formol est ajouté sous la forme d'un précondensat urée-formol.

**Claims**

1.  Process for the manufacture of aqueous urea-formaldehyde resin adhesives, characterized in that they exhibit a final F/U ratio of between 0.85 and 1.35, characterized in that
    - in a first stage, a precondensate of urea and of formaldehyde is condensed with urea in such quantities that the F/U molar ratio at this stage is between 1.8 and 2.3, the condensation being carried out at a pH of between 6 and 8, at a temperature of between 40 and 80 °C,
    - the condensation is then continued in a second stage at an acidic pH of between 4 and 6 until the solution exhibits a cloud point with water at a temperature of between 10 and 40 °C, the cloud point being determined by dissolving one volume of resin in three volumes of water,
    - formaldehyde is added in a third stage in such quantity that the F/U molar ratio at this stage is between more than 1.8 and 3, at a pH of between 6 and 8, and while continuing the condensation in the same temperature range, the product obtained being then optionally concentrated under vacuum so as to obtain a solids content of the final resin of between 60 and 70 % by weight,
    - urea is then added in a fourth stage so that the F/U molar ratio is between 0.85 and 1.35, the addition of urea being carried out at a temperature not exceeding 60 °C,
    - the resin obtained at the end of the last stage being then optionally concentrated under vacuum in the event of this step having been omitted at the end of the third stage, so as to obtain a resin exhibiting a final solids content of 60 to 70 %.

2.  Process according to Claim 1, characterized in that a "buffer" agent consisting of borax is added at the end of synthesis.

3.  Process according to either of Claims 1 and 2, characterized in that a precondensate of urea and of formaldehyde exhibiting an F/U molar ratio of 4 to 10 is employed in the first stage.

4.  Process according to one of Claims 1 to 3, characterized in that in the third stage formaldehyde is added in the form of a urea-formaldehyde precondensate.

**Patentansprüche**

1.  Verfahren zur Herstellung von wäßrigen Klebstoffharzen auf Harnstoff-Formaldehyd-Basis, die nach der Umsetzung ein Molverhältnis F/U (Formaldehyd/Harnstoff) von 0,85 bis 1,35 aufweisen, das durch folgende Schritte gekennzeichnet ist:
    - Kondensation eines Prekondensats aus Harnstoff und Formaldehyd in einem ersten Schritt mit Harnstoff in so großen Mengen, daß das Molverhältnis F/U bei diesem Schritt 1,8 bis 2,3 beträgt, wobei die Kondensation bei einem pH-Wert von 6 bis 8 und einer Temperatur von 40 bis 80 °C durchgeführt wird,
    - Fortsetzen der Kondensation in einem zweiten Schritt bei saurem pH von 4 bis 6, bis die Lösung einen Trübungspunkt mit Wasser bei einer Temperatur von 10 bis 40 °C aufweist, wobei der Trübungspunkt durch Herstellen einer Lösung aus einem Volumenteil Harz und drei Volumenteilen Wasser bestimmt wird,
    - Zugabe von Formaldehyd in einem dritten Schritt in einer so großen Menge, daß das Molverhältnis F/U bei diesem Schritt mehr als 1,8 und bis zu 3 beträgt, bei einem pH-Wert von 6 bis 8 und unter Fortsetzung der Kondensation im gleichen Temperaturbereich, wobei das erhaltene Produkt anschließend gegebenenfalls im Vakuum aufkonzentriert wird, um einen Trockenextrakt des als Endprodukt erhaltenen Harzes von 60 bis 70 Gew.-% zu erhalten,
    - Zugabe von Harnstoff in einem vierten Schritt auf eine Weise, daß das Molverhältnis F/U 0,85 bis 1,35 beträgt, wobei die Zugabe des Harnstoffs bei einer Temperatur von höchstens 60 °C durchgeführt wird,
    - gegebenenfalls Aufkonzentrieren des am Ende dieses letzten Schritts erhaltenen Harzes im Vakuum, um ein Harz zu erhalten, das einen Trockenextrakt von 60 bis 70 % darstellt, wenn dieser Verfahrensschritt am Ende des dritten Schritts weggelassen wurde.

2.  Verfahren nach Anspruch 1, dadurch gekennzeichnet, daß am Ende der Synthese ein aus Borax bestehendes "Puffer"-Mittel zugegeben wird.

3. Verfahren nach einem der Ansprüche 1 und 2,
dadurch gekennzeichnet, daß
im ersten Schritt ein Prekondensat aus Harnstoff und Formaldehyd verwendet wird, das ein Molverhältnis F/U von 4 bis 10 aufweist.

4. Verfahren nach einem der Ansprüche 1 bis 3,
dadurch gekennzeichnet, daß
im dritten Schritt Formaldehyd in Form eines Harnstoff-Formaldehyd-Prekondensats zugegeben wird.